# EUROPÄISCHE PATENTANMELDUNG

(11) **EP 1 195 829 A2**
(43) Veröffentlichungstag der Anmeldung: **10.04.2002**
(21) Anmeldenummer: 00121679.5
(22) Anmeldetag: 04.10.2000
(51) Int. Cl.: H01M 8/02

(54) **Verfahren zur Herstellung einer Bipolarplatte für Brennstoffzellen**

(71) Anmelder: Manhattan Scientifics, Inc., New York, NY 10022 (US)
(72) Erfinder: Koschany, Arthur, Dr., 94121 Salzweg (DE)
(74) Vertreter: Riederer Freiherr von Paar zu Schönau, Anton

(57) **Zusammenfassung**

Durch die Erfindung soll ein einfaches Verfahren zur Herstellung einer Bipolarplatte oder einer Abschlußplatte eines Brennstoffzellenstapels aus einer gasundurchlässigen, elektrisch leitfähigen, glatten Schicht und damit mechanisch stabil und elektrisch leitfähig verbundenen porösen Vorsprünge angegeben werden, das eine Einzelbearbeitung der Stege überflüssig macht. Diese Platte besteht aus einer als Separator dienenden, gasundurchlässigen, elektrisch leitfähigen Schicht und einer Kanalstruktur, die auf wenigstens einer Seite dieser Schicht gebildet ist und Vorsprünge und zwischen den Vorsprüngen liegende Zwischenräume, die als Gaskanäle dienen, umfaßt. Man legt die gasundurchlässige Schicht bereit und bringt die Vorsprünge unter Freilassung der Zwischenräume auf die gasundurchlässige Schicht in definierter Lage auf. Nach einem ersten Aspekt der Erfindung geschieht dies dadurch, daß man als Kanalstruktur ein Kanalstrukturblatt (6) herstellt, das die Vorsprünge (2) umfaßt, die in einem gegebenen Grundriß angeordnet und durch Hilfsbrücken (8,9) miteinander verbunden sind, daß man dieses Kanalstrukturblatt auf die gasundurchlässige Schicht (1) auflegt, um es mit dieser Schicht zu verbinden, indem man die Schicht und das Kanalstrukturblatt eventuell unter Pressung zur Herstellung eines Verbunds zusammenhält und dann dauerhaft verbindet, und daß man vor oder nach diesem Verbinden die Hilfsbrücken entfernt. Nach einem zweiten Aspekt der Erfindung formt man die Vorsprünge (2) aus einer verformbaren Masse direkt auf der gasundurchlässigen Schicht (1) mit Hilfe eines Formwerkzeugs, nämlich eines profilierten Stempels (8), mit dem man die auf die gasundurchlässige Schicht aufgebrachte verformbare Masse verformt und preßt und hierdurch gleichzeitig die Vorsprünge und die Zwischenräume bildet, woraufhin man die verformte Masse erhärtet und sie dabei zugleich fest mit der gasundurchlässigen Schicht verbindet.

## Beschreibung

Die Erfindung bezieht sich auf Verfahren zur Herstellung einer Bipolarplatte als verbindendes Element in einem Brennstoffzellenstapel oder einer Abschlußplatte eines solchen Stapels.

Bestimmte Typen von Brennstoffzellen sind mit einer Polymerelektrolyt-Membran (PEM) hergestellt. Diese ist auf beiden Seiten mit einer Katalysatorschicht versehen und befindet sich zwischen zwei Gasdiffusionsschichten. Es ist auch möglich, daß anstelle der Membran die beiden Gasdiffusionsschichten mit der Katalysatorschicht versehen sind. Auf der Anodenseite der Membran wird ein Brennstoff, z. B. Wasserstoffgas, und auf der Kathodenseite ein Oxidationsmittel, z. B. Sauerstoff, zugeführt. An der Anode bilden sich aufgrund des Katalysators Protonen, die den Elektrolyten in Form der Membran durchqueren und sich in der kathodenseitigen Katalysatorschicht mit dem Sauerstoff zu Wasser verbinden. Bei diesem Prozeß entsteht zwischen den beiden Katalysatorschichten eine Potentialdifferenz, die in einem äußeren Stromkreis genutzt wird. In der Regel werden zur Erzeugung größerer Leistung mehrere Brennstoffzellen hintereinander geschaltet und zu einem Brennstoffzellenstapel verbunden. Die auch als Separatoren bezeichneten Bipolarplatten sind die verbindenden Elemente in den Brennstoffzellenstapeln, die den Anoden-Gasraum einer Einzelzelle vom Kathodengasraum der anschließenden Zelle trennen. Sie müssen daher gasdicht und, um einen leitenden Kontakt zwischen den Einzelzellen zu gewährleisten, elektrisch leitfähig sein.

Es ist z. B. aus der DE-OS 198 05 683 und der DE-OS 30 13 043 bekannt, daß als Bipolarplatten glatte, gasdichte, elektrisch leitfähige Schichtmaterialien wie Metallfolien verwendet werden. In letzterer Druckschrift wird gezeigt, daß die Zufuhr der Reaktionsgase durch eine auf die Bipolarplatte gelegte, poröse Kohlefaserpapierschicht hindurch erfolgen kann.

Ein verbessertes Heranführen der Reaktionsgase an den Reaktionsort kann erreicht werden, indem gasdichte Platten verwendet werden, die eine Strömungskanalstruktur oder Gasverteilerstruktur mit Vorsprüngen und Zwischenräumen, im allgemeinen Stegen und Nuten aufweisen, durch die das Reaktionsgas verteilt wird. Die Vorsprünge können auch andere Formen haben, z. B. noppenförmig sein. Die Zwischenräume werden üblicherweise durch Herausfräsen der Kanäle aus Graphitplatten hergestellt, was ein aufwendiges Verfahren darstellt, da die Kanäle einzeln gefräst werden müssen. Eine weitere Möglichkeit der Herstellung ergibt sich aus EP-A 0 933 825. Hier wird eine Mischung aus Kohlenstoffteilchen und einem Polymer in einer Form zu einer Bipolarplatte mit Kanälen gepreßt. Nachteilig ist dabei, daß diese Bipolarplatte material- und herstellungsbedingt eine große Dicke aufweisen muß, um die Gasundurchlässigkeit sicherzustellen und für mechanische Stabilität zu sorgen. Dies vergrößert Volumen und Gewicht jeder Einzelzelle, was die volumetrische und gravimetrische Energiedichte der Brennstoffzelle (abgegebene Leistung pro Volumen bzw. pro Gewicht) verringert.

In der DE-PS 197 43 067 wird erwähnt, daß Strömungskanäle auch durch Aufbringen von Erhöhungen auf eine glatte Platte realisiert werden können. Ein Beispiel dafür gibt die Druckschrift DE-OS 39 35 310, die das Aufeinanderstapeln von Streifen eines Stegmaterials aus Mischoxid auf eine gasdichte Schicht darstellt. Zwischen den Streifen sind die Kanäle ausgestanzt worden. Die Schichten des Stapels werden durch Sintern des gesamten Brennstoffzellenstapels verbunden. Der Nachteil dieser Methode ist, daß die Streifen des Stegmaterials einzeln ausgestanzt und aufeinandergestapelt werden müssen, um eine Kanalstruktur zu formen.

Für den Fall gasundurchlässiger Stege in den Kanalstrukturen ist es auch bekannt, daß großporige, elektrisch leitfähige Materialien als Gasverteilerschicht zwischen der gasdichten Kanalstruktur der Bipolarplatte und der Gasdiffusionsschicht angeordnet sind, wie beispielsweise in der US-PS 5,620,807 beschrieben ist.

In der DE-PS 36 14 574 wird eine Brennstoffzelle mit Gasdiffusionsschichten beschrieben, die ihrerseits die Kanalstruktur enthalten. Hierfür wird eine Verbindung einer porösen Kohlenstoffplatte, z. B. eines Kohlefaserpaperblatts, mit einem porösen Kohlenstoffverbundmaterial geschaffen, wobei in letzteres eine Kanalstruktur zur Zuführung des Reaktionsgases eingearbeitet ist. Dieser Verbund wird als Elektrodenteilmaterial bezeichnet, das kammartig mit den Scheiteln der z. B. stegartigen Vorsprünge der Kanalstruktur an der Bipolarplatte anliegt. Dabei werden die porösen Teile dieser Gasdiffusionsschicht so angebracht, daß die offenen Flächen der Kanalstruktur von der gasdichten Platte verschlossen werden und die gegenüberliegende geschlossene Seite in Kontakt mit dem Reaktionsraum der Zelle steht. Mit Hilfe eines profilierten Stempels wird das poröse Kohlenstoffmaterial mit seiner gasdichten Rückenplatte direkt auf dieser aus einer verformbaren Masse geformt, wobei man zur Bildung der Zwischenräume eine Maske verwendet.

Gegenüber diesen Anordnungen ist prinzipiell eine Gewichtsersparnis möglich, indem man direkt auf einer gasundurchlässige, mechanisch stabile Schicht Stege aus einem porösen Material anbringt, bevorzugt dergestalt, daß die Stege keine zusammenhängende Anordnung bilden, sondern einzeln auf der gasundurchlässigen Schicht angeordnet und nur über letztere verbunden sind. Es kann so gegenüber einer gasundurchlässigen Kanalstruktur mit darüber liegender poröser Gasverteilerschicht für das Material der Stege ein poröses Material verwendet werden und die durchgehende Gasverteilerschicht eingespart werden. Gegenüber einer in die poröse Schicht eingearbeiteten Kanalstruktur wird das Material des zusammenhängenden Teils der porösen Schicht eingespart. Eine gleichmäßige Verteilung des Reaktionsgases wird dabei durch die Gasdurchlässigkeit des Stegmaterials gewährleistet. Durch diese Vorgehensweise wird, neben der Gewichtserspamis, auch die Gesamtdicke der Einzelzelle reduziert. Beides ist vor allem für mobile Anwendungen wünschenswert. Diese Anordnung wird in der DE-PS 198 15 796 erwähnt, wo poröse Streifen aus einer Eisen-Chrom-Legierung auf ein gasdichtes Blech aus dem selben Material geschweißt oder gelötet sind.

Durch die Erfindung soll ein einfaches Verfahren zur Herstellung einer Bipolarplatte mit dieser Anordnung der gasundurchlässigen, elektrisch leitfähigen, glatten Schicht und der damit mechanisch stabil und elektrisch leitfähig verbundenen porösen Vorsprünge angegeben werden, das eine Einzelbearbeitung der Stege überflüssig macht. Die Erfindung schafft ein Verfahren zum Herstellen einer Bipolarplatte oder einer Abschlußplatte eines Brennstoffzellenstapels, wobei diese Platte aus einer als Separator dienenden, gasundurchlässigen, elektrisch leitfähigen Schicht und einer Kanalstruktur besteht, die auf wenigstens einer Seite dieser Schicht gebildet ist und Vorsprünge und zwischen den Vorsprüngen liegende Zwischenräume, die als Gaskanäle dienen, umfaßt; wobei man die gasundurchlässige Schicht bereitlegt und die Vorsprünge unter Freilassung der Zwischenräume auf die gasundurchlässige Schicht aufbringt; gemäß der Erfindung werden die Stege in definierter Lage angebracht. Nach einem ersten Aspekt der Erfindung geschieht dies dadurch, daß man als Kanalstruktur ein Kanalstrukturblatt herstellt, das die Vorsprünge umfaßt, die in einem gegebenen Grundriß angeordnet und durch Hilfsbrücken miteinander verbunden sind, daß man dieses Kanalstrukturblatt auf die gasundurchlässige Schicht auflegt, um es mit dieser Schicht zu verbinden, indem man die Schicht und das Kanalstrukturblatt eventuell unter Pressung zur Herstellung eines Verbunds zusammenhält und dann dauerhaft verbindet, und daß man vor oder nach diesem Verbinden die Hilfsbrücken entfernt. Nach einem zweiten Aspekt der Erfindung formt man die Vorsprünge aus einer verformbaren Masse mit Hilfe eines Formwerkzeugs direkt auf der gasundurchlässigen Schicht. Vorzugsweise verwendet man als das Formwerkzeug einen profilierten Stempel, wobei man die auf die gasundurchlässige Schicht aufgebrachte verformbare Masse mit dem profilierten Stempel verformt und preßt und hierdurch gleichzeitig die Vorsprünge und die Zwischenräume bildet, und man die verformte Masse erhärtet und sie dabei zugleich fest mit der gasundurchlässigen Schicht verbindet.

Weitere Einzelheiten, Vorteile und Weiterbildung der Erfindung ergeben sich aus den Unteransprüchen und aus der folgenden Beschreibung bevorzugter Durchführungsbeispiele unter Bezugnahme auf die Zeichnung. Es zeigen:

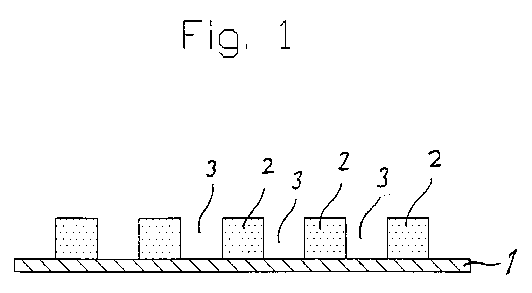

Fig. 1: einen Querschnitt durch eine Bipolarplatte, bestehend aus einer gasundurchlässigen Schicht und darauf angebrachten stegförmigen Vorsprüngen;
Fig. 2a: eine Draufsicht auf ein Kanalstrukturblatt für die Herstellung der stegförmigen Vorsprünge;
Fig. 2b: die gasundurchlässige Schicht der Bipolarplatte, mit gekennzeichneten Positionen der stegförmigen Vorsprünge;
Fig. 2c: die Bipolarplatten nach Entfernen von Hilfsbrücken zwischen den Vorsprüngen;
Fig. 3: einen Querschnitt durch eine Anordnung zur Herstellung der Bipolarplatte nach Fig. 1;
Fig. 4a: einen Querschnitt durch ein Formwerkzeug mit einer trapezwellenartigen Profilierung in einem oberen Teil, und durch die gasundurchlässige Schicht mit darauf verteiltem, pulverförmigem Material in einem unteren Teil des Formwerkzeugs; und
Fig. 4b: einen Querschnitt durch die Teile von Fig. 4a in einem Verfahrensschritt des Heißpressens und Aushärtens der stegförmigen Vorsprünge.

Mit Hilfe der erfindungsgemäßen Verfahren hergestellte Bipolarplatten setzen sich zusammen aus einer gasundurchlässigen Schicht 1 beispielsweise aus einer Metallfolie und einer darauf gebildeten Kanalstruktur aus im beschriebenen Fall als Stege 2 ausgebildeten Vorsprüngen und Kanälen 3, die durch die Zwischenräume zwischen den Stegen 2 gebildet werden. Die Stege 2 bestehen aus einem Stegmaterial, das nach dem Aufbringen auf die Schicht eine Gasverteilerstruktur bildet.

Die folienartige Schicht 1 muß aufgrund ihrer Verwendung als Bipolarplatte in PEM-Brennstoffzellenstapeln zur Trennung der einzelnen Gasräume gegeneinander gasundurchlässig sein. Eine sehr gute Leitfähigkeit muß aufgrund der Reihenschaltung der Einzelzellen in einem Brennstoffzellenstapel und des Ziels der Maximierung der Leistung ebenfalls gewährleistet sein. Das verwendete Schichtmaterial muß weiterhin mechanisch stabil sein. Anderenfalls würden Verformungen der Bipolarplatte beim Zusammenpressen des Brennstoffzellenstapels auftreten, was oftmals notwendig ist aus Gründen der Minimierung der inneren Widerstände der einzelnen Schichten des Stapels oder aufgrund der oftmals benötigten Kraft für das verwendete Dichtungssystem von einzelnen Gasräumen und Gaszuführungen gegeneinander oder gegen die Umgebung. Weiterhin muß das Schichtmaterial chemisch inert gegenüber den Bedingungen in einem Brennstoffzellenstapel sein. Die Verwendung leichter Materialien ist bevorzugt, vor allem beim Einsatz des Brennstoffzellensystems in mobilen Anwendungen.

Das Material der Schicht 1 kann, wie erwähnt, beispielsweise eine Metallfolie sein. Wird aus Kostengründen auf den Einsatz von Edelmetallen verzichtet, so kann das Problem der Leistungsabnahme aufgrund von Korrosionen durch eine elektrisch leitfähige Beschichtung der Metallfolie z. B. mit Kohlenstoffmaterialien verhindert werden. Weiterhin können als Schichtmaterialien ein intrinsisch leitender Kunststoff wie Polyanilin oder Polypyrol, oder eine Folie aus expandiertem Graphit verwendet werden. Letztere sollte zur Erreichung der Gasdichtigkeit und zur Verbesserung der mechanischen Eigenschaften mit einem Kunstharz imprägniert sein. Zum Einsatz kann auch ein aus der WO 00/10174 bekanntes gasundurchlässiges und elektrisch leitfähiges Schichtmaterial kommen, das sehr leicht ist und nur eine Dicke zwischen 0,15 und 0,25 mm besitzt.

Das Stegmaterial der Stege 2 der Kanalstruktur ist ein elektrisch leitfähiges Material, das zur Gewichtsminimierung des gesamten Systems bevorzugt eine geringe Dichte, besonders bevorzugt eine Dichte kleiner als 1,8 g/cm³ hat. Weiterhin ist es bevorzugt porös, um eine gleichmäßige Verteilung des Reaktionsgases schon in dieser Schicht zu gewährleisten und somit eine laterale Diffusion des Reaktionsgases hin zur katalytisch aktiven Schicht in den Teilen einer Gasdiffusionsschicht, die sich in der Brennstoffzelle unter den Bereichen der Stege befinden, zu ermöglichen. Die Stege sollten darüber hinaus bevorzugt druckstabil sein, besonders bevorzugt bis 10 bar, um eine mechanische Festigkeit der Stege 2 beim Zusammenpressen des Brennstoffzellenstapels aber auch im eingebauten Zustand gegenüber Erschütterungen zu gewährleisten.

Das Material der Stege 2 kann jedes obige Eigenschaften erfüllende Material sein, beispielsweise ein kohlenstoffhaltiges Material, wie Kohlefaserpapier, karbonisierter oder graphitierter Filz oder Hartfilz, Kohlenstoffvliesen, Graphitteilchen, bevorzugt expandierter Naturgraphit, Graphitfasern oder -fäden. Weiterhin muß dieses Material geeignet sein, einen Verbund zu bilden. Die Bindung kann hergestellt werden, wie bei Vliesen; sie kann aufgrund der Materialeigenschaften an sich schon gegeben sein, wie dies beispielsweise bei verdichtetem, expandierten Naturgraphit der Fall ist oder bei karbonisiertem oder graphitiertem Kohlefaserpapier, dessen Binder ebenfalls karbonisiert oder graphitiert wurde, bei Geweben oder Filzen. Muß die Bindung des kohlenstoffhaltigen Materials erst hergestellt werden, wie bei Graphitteilchen, bedarf es eines Binders. Dies ist bevorzugt ein Polymer, zum Beispiel ein thermoplastischer Kunststoff wie Polyäthylen, Polypropylen, Polystyrol, oder ein aushärtbares Kunstharz wie Epoxid-, Furan- oder Phenolharz, oder ein Hilfspolymer wie Polytetrafluoräthylen (PTFE).

Aus solchem Material werden die Stege 2 der Gasverteilerstruktur gebildet. Ein Steg stellt einen Körper mit zwei gegenüberliegenden bevorzugt parallelen Flächen dar, deren eine mit der gasundurchlässigen Schicht 1 verbunden wird. Der Umriß dieser Fläche, die die Grundfläche darstellt, kann eine beliebige Form haben, bevorzugt die eines Rechtecks. Durch die Positionierung der Stege 2 auf der Schicht 1 entsteht eine Gasverteiler- oder Steg-Kanal-Struktur, die Verteilerstruktur für das Reaktionsgas. Die Höhe der einzelnen Stegkörper entspricht der Tiefe der Kanäle der Gasverteiler- oder Kanalstruktur.

Da die Stege der Gasverteilerstruktur häufig nicht als eine zusammenhängende Anordnung gebildet werden, sind Verfahren notwendig, um eine kostenintensive einzelne Fertigung jedes Steges 2 und eine einzelne Positionierung jedes Steges 2 auf der Schicht 1 zu vermeiden. Die im folgenden beschriebenen erfindungsgemäßen Verfahren gewährleisten eine präzise geometrische Positionierung jedes Steges 2 ohne Einzelbearbeitung.

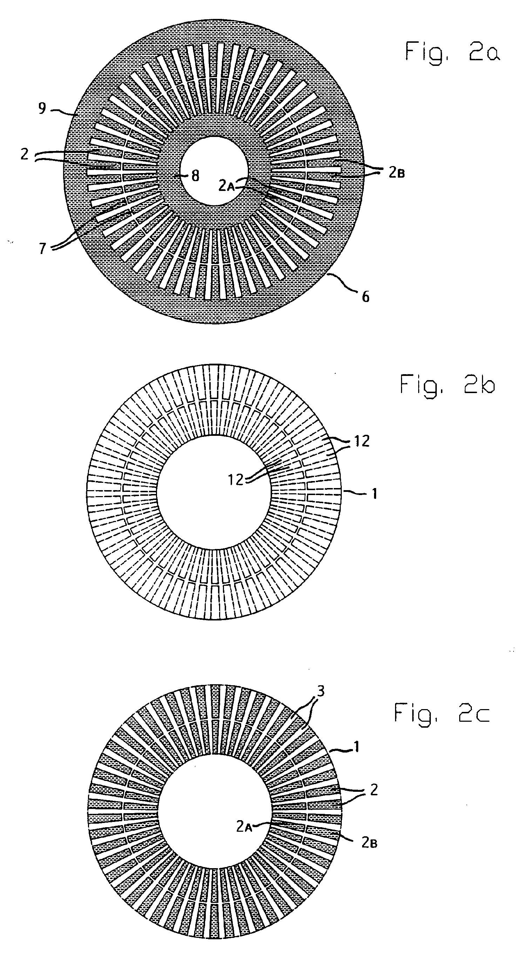

In einem ersten Aspekt eines Herstellungsverfahrens, dargestellt in Fig. 2, werden die Stege 2 der Verteilerstruktur durch Ausschneiden, bevorzugt durch Ausstanzen, aus einem zusammenhängenden Blatt des Stegmaterials gefertigt. Nach einem zweiten Aspekt entstehen die Stege 2 unter Verwendung eines Formwerkzeugs direkt auf der gasundurchlässigen Schicht 1, wie in den Fig.n 3 und 4 dargestellt ist.

Die folienartige Schicht 1 und die Stege 2 der Gasverteilerstruktur müssen elektrisch leitfähig und mechanisch stabil miteinander verbunden werden. Die Herstellung dieser Verbindung kann mittels jedes gängigen Verbundverfahrens erfolgen, das diese Bedingung erfüllt. Beispielsweise kann ein Klebeverfahren unter Einsatz eines Haftvermittlers zur Anwendung kommen. Als Haftvermittler können bevorzugt ein Polymer, beispielsweise ein Thermoplast, wie Polyäthylen, Polypropylen oder Polystyrol, oder ein aushärtbares Kunstharz, wie Epoxid-, Furan- oder Phenolharz, dienen. Der Haftvermittler wird mit der Schicht 1 oder den Stegen 2 oder mit beiden in Kontakt gebracht. Dies kann beispielsweise als Pulver, Folie, in flüssiger, pastöser oder sonstiger Form mittels Auflegen, Sprühen, Tauchen, Pinseln oder mit sonstigen gängigen Verfahren geschehen. Anschließend muß der Haftvermittler je nach Art seiner Zusammensetzung unter den entsprechenden Bedingungen, beispielsweise bei leichter Temperaturerhöhung oder bei Raumtemperatur, ausgehärtet werden. Ein bevorzugtes Verbundverfahren ist das Heißpressen (Anwendung von Druck unter erhöhter Temperatur) mit oder ohne Haftvermittler. Bei entsprechender Wahl von Schicht- und Stegmaterial kann die Herstellung der Stege 2 und der Verbund mit der Schicht 1 auch schon in den Herstellungsprozeß der Schicht integriert werden und so in nur einem Herstellungsschritt die kombinierte Platte produziert werden.

Weitere Einzelheiten und Durchführungsformen des Herstellungsverfahrens der Bipolarplatte werden im Folgenden anhand von Beispielen beschrieben.

### Beispiel 1:

Die Bipolarplatten für einen Brennstoffzellenstapel mit Rohrstruktur werden aus Kohlenstoffflächenmaterialien aufgebaut. Als Material für die elektrisch leitfähige Schicht 1 kommt das aus der Druckschrift WO 00/10174 bekannte Material zur Anwendung. Dieses Schichtmaterial besteht aus einem Kohlefaservlies, das mit einer Mischung aus Ruß und Graphit, insbesondere gemahlenem expandiertem Graphit, gefüllt ist und mit Epoxidharz (z. B. Körapox der Fa. Kömmerling) imprägniert wird. Nach Heißpressen und Aushärten beträgt die Dicke des Schichtmaterials zwischen 0,15 und 0,25 mm. Das gewählte Stegmaterial ist ein handelsübliches Flächenmaterial, bevorzugt eine Graphitfolie aus verdichtetem, expandiertem Naturgraphit (z. B. Sigraflex der Fa. SGL Carbon AG), besonders bevorzugt mit einer Dichte von 0,4 bis 0,8g/cm³. Weiterhin können als Flächenmaterial ein poröses Kohlefaserpapier (z. B. TGPH 1.4 t der Fa. Toray, Japan) oder ein Filz, Hartfilz oder graphitiertes Vlies, welche mit einem Kunstharz (z. B. Epoxidharz) vorab imprägniert werden, um eine möglichst große Druckstabilität zu erreichen, verwendet werden.

Aus dem gewähltem Kohlenstoffflächenmaterial wird nun, wie in Fig. 2a gezeigt, für die Stege zunächst ein als Kanalstrukturblatt 6 bezeichnetes Blatt passender Größe bereitgestellt und aus diesem werden mittels eines Formwerkzeugs die Kanäle 3 zwischen den einzelnen Stegen 2, und zwar alle Kanäle dieser Seite der Bipolarplatte, in einem einzigen Arbeitsschritt ausgestanzt. Jeder Steg 2 besteht beim in den Fig.n 2a bis 2c dargestellten Beispiel aus einem inneren Teilsteg 2a und einem äußeren Teilsteg 2b, mit einem dazwischenliegenden Spalt 7. Beim Ausstanzen muß dafür Sorge getragen werden, daß die geometrische Anordnung der Stege nach dem Ausstanzen erhalten bleibt. Zur Erhaltung der Positionierung werden beim Ausstanzen der Stege 2 im Kanalstrukturblatt Hilfsbrücken 8, die die inneren Teilstege 2a miteinander verbinden, und Hilfsbrücken 9, die die äußeren Teilstege 2b miteinander verbinden, stehengelassen. Beim dargestellten Beispiel haben die Hilfsbrücken die Form von Ringen, von denen die Teilstege 2a, 2b radial nach außen bzw. innen abstehen. Die Stege 2 werden also zuerst nicht vollständig ausgestanzt, sondern bleiben über die Hilfsbrücken 8 bzw. 9, wie in Fig. 2a dargestellt, miteinander verbunden. Auf der Schicht 1 sind andererseits Stegpositionen 12 vorgegeben, wie Fig. 2b zeigt. Die Kombination von Stegen 2a, 2b und Hilfsbrücken 8, 9 wird nun auf die vorgesehenen Positionen 12 der Stege auf der Schicht 1 dergestalt aufgelegt, daß die Hilfsbrücken 8, 9 außerhalb der Fläche der eigentlichen Bipolarplatte zu liegen kommen und nach der Herstellung des Verbundes aus Stegen und Schichtmaterial mechanisch einfach entfernt werden können, nämlich die Hilfsbrücken 8 innerhalb der Rohrstruktur und die Hilfsbrücken 9 außerhalb der Rohrstruktur des Brennstoffzellenstapels, die dort abgeschnitten werden können. Das Ergebnis ist in Fig. 2c dargestellt. Bevorzugt erfolgt das Entfernen der Hilfsbrücken 8, 9 erst nach dem Zusammenbau des kompletten Brennstoffzellenstapels, um die exakte Positionierung sicherzustellen.

Optional kann zusätzlich noch eine einfache Hilfskonstruktion verwendet werden, ein sog. Vakuumspanntisch (siehe Druckschrift WO 00/02279). Dieser besteht im wesentlichen aus einem Kanalsystem, das durch ein poröses Material, bevorzugt ein Kohlenstoffmaterial (z. B. ein Kohlenstoffpapier) abgedeckt ist. Durch Erzeugen eines Unterdrucks in diesem Kanalsystem werden Materialien, die auf dem Vakuumspanntisch positioniert wurden, von diesem so lange gehalten, bis der Unterdruck im Kanalsystem wieder aufgehoben wird. Der Stanzvorgang geschieht nun bei gleichzeitigem Ansaugen auf dem Vakuumspanntisch, wobei dann die einzelnen Stege nach Entfernen des nicht benötigten Restmaterials vom Vakuumspanntisch an ihrer jeweiligen Stanz-Position gehalten werden. Die Gesamtheit der Stege 2 kann nun gleichzeitig mit Hilfe des Vakuumspanntisches in unveränderter Position auf der elektrisch leitfähigen Schicht 1 aufgebracht werden. Die Verbindung der Stege mit dem Schichtmaterial erfolgt dann wie beschrieben mittels eines Klebeverfahrens. Die Verwendung des Vakuumspanntischs ergibt, daß man mit dünnen, schmalen Hilfsbrücken auskommt.

### Beispiel 2:

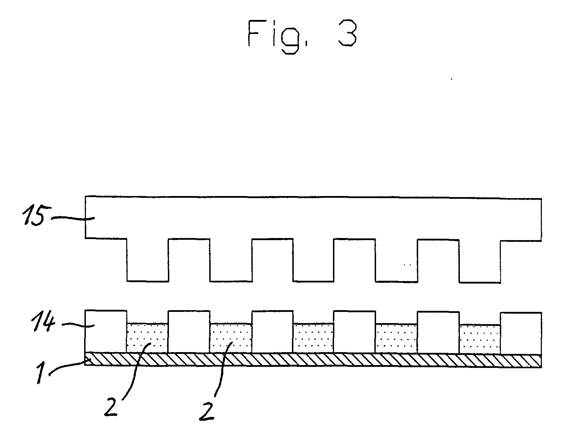

Die Stege 2 und Kanäle 3 der Gasverteilerstruktur können auch mittels eines Formwerkzeugs direkt auf der Schicht 1 gefertigt werden, wie in Fig. 3 dargestellt.

Als Schichtmaterial dient auch hier das aus der Druckschrift WO 00/10174 bekannte elektrisch leitfähige Schichtmaterial. Die Stege 2 werden aus diesem leichten, porösen, elektrisch ieitfähigen Material gebildet, speziell wird hier eine Mischung von expandiertem gemahlenem Naturgraphit (z. B. TIMREX BN "A" 90 oder TIMREX BN "B" 90 der Fa. Timcal, Schweiz) oder von Graphitfasern (z. B. Donacarbo SG 241 der Fa. Ashland Südchemie-Kernfest GmbH) oder Ruß mit einer wäßrigen PTFE-Suspension verwendet. Weiter kann auch eine Mischung aus den oben genannten Substanzen mit einer wäßrigen PTFE-Suspension angewandt werden. Diese Mischung besitzt einen Gesamtfeststoffanteil im Verhältnis zum Gesamtflüssigkeitsanteil von eins zu zehn bezüglich der Masse. Die Suspensions-flüssigkeit besteht beispielsweise aus gleichen Massenanteilen Wasser und Isopropanol. Weiter beträgt der PTFE-Anteil an den Feststoffen der Suspension zwischen 10 und 70 Gewichtsprozent, bevorzugt zwischen 30 und 50 Gewichtsprozent.

Zunächst wird als Haftvermittler Epoxidharz auf das Schichtmaterial aufgebracht. Zur Formung und gleichzeitigen Positionierung der Stege wird ein Werkstück, nämlich eine Maske 14 auf das Material der Schicht 1 aufgelegt. Die Maske 14 ist an den Stellen mit Durchbrechungen versehen, die später von den Stegen 2 eingenommen werden sollen. Das Stegmaterial liegt nach Abscheiden eines Teils der Suspensions-Flüssigkeit in flüssiger bzw. pastöser Form vor und wird in die Maske 14 eingefüllt. Das Abscheiden der Suspensionsflüssigkeit erfolgt durch intensives Kneten. Dabei klumpen PTFE und Graphit zusammen und diese hydrophobe Masse drängt die Flüssigkeit nach außen. Die Dauer des Knetens bestimmt die Menge an Flüssigkeit, die ausgeschieden wird. Es wird solange geknetet, bis das Stegmaterial eine pastöse Konsistenz hat. Das Stegmaterial wird dann nach Einfüllen in die Maske getrocknet. Danach werden die Stege geformt und gleichzeitig mit dem Schichtmaterial elektrisch leitfähig verbunden, indem bei erhöhter Temperatur mittels eines in die Durchbrechungen des Werkstücks passenden Stempels 15 Druck auf das Stegmaterial ausgeübt wird. Das Aufbringen der Stege kann aber auch nur durch Trocknung des Stegmaterials in der Maske oder durch reine Wärmebehandlung geschehen. Nach der Formung der Stege liegt ihre Porosität zwischen 10 und 70 Prozent, bevorzugt zwischen 30 und 50 Prozent. Die Porosität der Stege wird bestimmt durch den ausgeübten Druck und die dabei herrschende Temperatur.

### Beispiel 3:

Bei dieser Durchführungsform des Herstellungsverfahrens wird die Schicht 1 in den unteren Teil 17 eines Formwerkzeugs eingelegt. Als Stegmaterial verwendet man eine pulverförmige Mischung aus gemahlenem expandiertem Naturgraphit (z. B. TIMREX BN "B" 90 der Fa. Timcal, Schweiz) oder gemahlenen Flocken des expandierten Graphits (Produkt der Firma Graphitwerk Kropfmühl) und einem pulverförmigen Thermoplasten, nämlich Polyäthylen, Polypropylen oder einem teilweise fluoriertem Thermoplasten. Der Teilchendurchmesser des Thermoplasten beträgt zwischen 10 und 50 µm, der des gemahlenen Graphits zwischen 75 µm und 0,5 mm. Der Anteil des Thermoplasten an der Mischung beträgt zwischen 20 und 70 Gewichtsprozent, bevorzugt zwischen 30 und 55 Gewichtsprozent.

Im Gegensatz zu üblichen Verfahren, bei denen Thermoplast und Graphit bei einer Temperatur größer als der Schmelzpunkt des Thermoplasten geknetet und in Extrudern homogenisiert werden, werden hier Thermoplast und Graphit in Pulverform bei Raumtemperatur homogen vermengt. Dadurch wird eine zu starke Umhüllung der Graphitteilchen durch den Thermoplasten vermieden, was eine wesentlich höhere Leitfähigkeit des Stegmaterials zur Folge hat. Da der Thermoplast nur kurzzeitig während des Aufpressens des Stegmaterials auf die gasundurchlässige Schicht zähflüssig wird, reichen die dabei auftretenden Materialbewegungen des Thermoplasten nicht für eine Umhüllung der Graphitteilchen aus.

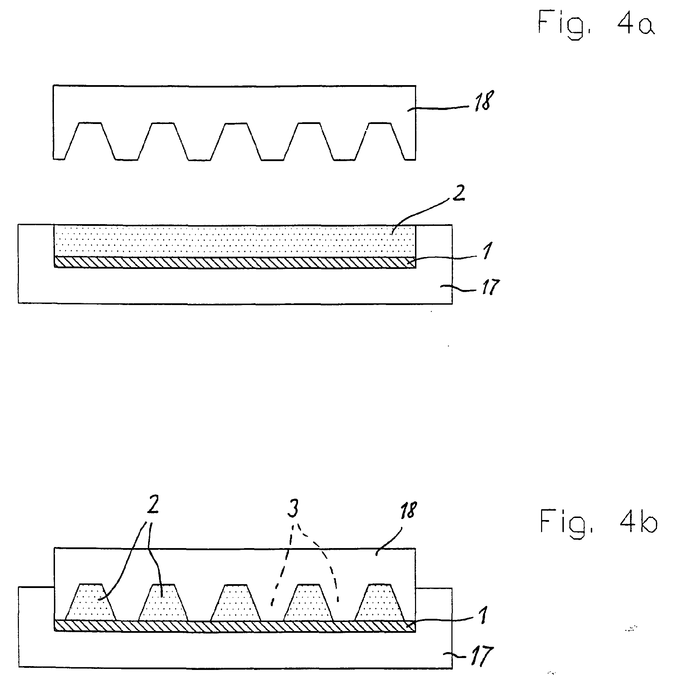

Die Mischung wir nun ganzflächig auf der Schicht 1 verteilt, die sich im unteren Teil 17 des Formwerkzeugs befindet (Fig. 4a). Zur Ausgestaltung der Stege wird nun ein oberer Teil 18 des Formwerkzeugs, der Rippen für die zu formenden Kanäle 3 und Vertiefungen für die zu formenden Stege 2 der Gasverteilerstruktur aufweist, bei erhöhter Temperatur auf das pulverförmige Stegmaterial gedrückt. Die Temperatur liegt dabei knapp über dem Schmelzpunkt des verwendeten Thermoplasten. Der ausgeübte Druck beträgt zwischen 50 und 500 bar, bevorzugt zwischen 100 und 200 bar. Durch die erhöhte Temperatur fließt das Stegmaterial, vom oberen Teil 18 des Formwerkzeug verdrängt, in dessen Vertiefungen und bildet dort nach Erhärten die Stege 2 der Gasverteilerstruktur, dargestellt in Fig. 4b. Nach der Formung der Stege liegt ihre Porosität zwischen 10 und 60 Prozent, bevorzugt zwischen 20 und 40 Prozent. Die Porosität der Stege wird bestimmt durch den ausgeübten Druck und die dabei herrschende Temperatur. Letztere hat hier besonderen Einfluß auf die Porosität, da sie bestimmt wie stark der Thermoplast beim Pressen flüssig wird.

In zweckmäßiger Weise ist die Form der Vertiefungen des Formwerkzeugs trapezförmig, wodurch die Stege 2 an der angrenzenden Brennstoffzellen-Komponente mit einer Fläche anliegen, die die Flächenpressung beim Pressend es Stapels in zulässigen Grenzen hält.

### Beispiel 4:

Das Stegmaterial wird als kompakter Körper auf die Schicht 1 gelegt. Als Stegmaterial findet Kohlefaserpapier (z. B. TGPH 1.4 t der Fa. Toray, Japan) Anwendung, das mit einem aushärtbaren Kunstharz, nämlich einem Epoxidharz (z. B. Körapox der Fa. Kömmerling), getränkt wurde. Diese Vorbehandlung dient einerseits der Erhöhung der mechanischen Stabilität des Kohlefaserpapiers, andererseits ist das Kunstharz gleichzeitig der Haftvermittler zwischen dem Schichtund dem Stegmaterial und kann bei Bedarf zusätzlich auf die Schicht 1 vor Auflegen des Stegmaterials aufgebracht werden. Mittels eines entsprechende Vertiefungen aufweisenden Formwerkzeugs wird bei erhöhter Temperatur Druck auf das Stegmaterial ausgeübt. Durch die hohe Porosität des Kohlefaserpapiers bleibt an den Stellen, an denen es vom Formwerkzeug auf die Schicht 1 gepreßt wird, nur eine sehr geringe Materialdicke übrig. An den Stellen der Vertiefungen des Formwerkzeugs bleibt die poröse Struktur des Kohlepapiers erhalten und bildet die Stege 2.

## Patentansprüche

1. Verfahren zum Herstellen einer Bipolarplatte oder einer Abschlußplatte eines Brennstoffzellenstapels, wobei diese Platte aus einer als Separator dienenden, gasundurchlässigen, elektrisch leitfähigen Schicht (1) und einer Kanalstruktur (2, 3) besteht, die auf wenigstens einer Seite dieser Schicht (1) gebildet ist und Vorsprünge (2) und zwischen den Vorsprüngen liegende Zwischenräume (3), die als Gaskanäle dienen, umfaßt; wobei man die gasundurchlässige Schicht (1) bereitlegt und die Vorsprünge (2) unter Freilassung der Zwischenräume (3) auf die gasundurchlässige Schicht (1) auflegt und mit ihr zur Herstellung eines Verbunds zusammenhält und dann dauerhaft verbindet, **dadurch gekennzeichnet, daß** man als Kanalstruktur ein Kanalstrukturblatt (6) herstellt, das die Vorsprünge (2) umfaßt, die in einem gegebenen Grundriß angeordnet und durch Hilfsbrücken (8, 9) miteinander verbunden sind, daß man dieses Kanalstrukturblatt (6) auf die gasundurchlässige Schicht (1) auflegt, um es mit dieser Schicht (1) zu verbinden, und daß man vor oder nach diesem Verbinden die Hilfsbrücken (8, 9) entfernt.

2. Verfahren nach Anspruch 1, **dadurch gekennzeichnet, daß** man zur Herstellung des Kanalstrukturblatts (6) dessen Vorsprünge (2) und Hilfsbrücken (8, 9) gleichzeitig aus einer zusammenhängenden Schicht des Blattmaterials ausschneidet.

3. Verfahren nach Anspruch 1 oder 2, **dadurch gekennzeichnet, daß** man beim Auflegen des Kanalstrukturblatts (6) auf die gasundurchlässige Schicht (1) eine gegenseitige Berührung dieser Schicht (1) und der Hilfsbrücken (8, 9) verhindert und die Hilfsbrücken dann aus dem hergestellten Verbund entfernt.

4. Verfahren nach Anspruch 3, **dadurch gekennzeichnet, daß** man das Kanalstrukturblatt (6) mit einer über den Rand der gasundurchlässigen Schicht hinausreichenden Erstreckung bildet und hierbei jeden der Vorsprünge (2) bis über diesen Rand überstehen läßt, und die Hilfsbrücken (8, 9) zwischen den Vorsprüngen (2) außerhalb dieses Rand vorsieht; und daß man nach dem Herstellen des Verbunds aus der Schicht (1) und dem Kanalstrukturblatt (6) dessen über diesen Rand überstehende Teile abtrennt.

5. Verfahren nach einem der Ansprüche 1 bis 4, **dadurch gekennzeichnet, daß** man das Kanalstrukturblatt (6) mittels eines Vakuumspanntischs auf die gasundurchlässige Schicht aufbringt.

6. Verfahren zum Herstellen einer Bipolarplatte oder einer Abschlußplatte eines Brennstoffzellenstapels, wobei diese Platte aus einer als Separator dienenden, gasundurchlässigen, elektrisch leitfähigen Schicht (1) und einer Kanalstruktur (2, 3) besteht, die auf wenigstens einer Seite dieser Schicht (1) gebildet ist und Vorsprünge (2) und zwischen den Vorsprüngen liegende Zwischenräume (3), die als Gaskanäle dienen, umfaßt; wobei man die gasundurchlässige Schicht (1) bereitlegt und die Vorsprünge (2) unter Freilassung der Zwischenräume (3) auf die gasundurchlässige Schicht (1) aufbringt, **dadurch gekennzeichnet, daß** man die Vorsprünge (2) aus einer verformbaren Masse mit Hilfe eines Formwerkzeugs (15; 17, 18) direkt auf der gasundurchlässigen Schicht (1) formt.

7. Verfahren nach Anspruch 6, **dadurch gekennzeichnet, daß** man als das Formwerkzeug einen profilierten Stempel (15) verwendet, daß man die auf die gasundurchlässige Schicht (1) aufgebrachte verformbare Masse mit dem profilierten Stempel (15) verformt und preßt und hierdurch gleichzeitig die Vorsprünge (2) und die Zwischenräume (3) bildet, und daß man die verformte Masse erhärtet und sie dabei zugleich fest mit der gasundurchlässigen Schicht (1) verbindet.

8. Verfahren nach Anspruch 7, **dadurch gekennzeichnet, daß** man die Vorsprünge (2) in Form langgestreckter Rippen herstellt, deren Querschnitt zumindest angenähert trapezförmig ist, und man den Stempel (15) mit seinen vorspringenden Formteilen bis zumindest angenähert an die Oberfläche der gasundurchlässigen Schicht (1) heranführt.

9. Verfahren nach einem der Ansprüche 6 bis 8, **dadurch gekennzeichnet, daß** man auf die gasundurchlässige Schicht (1) eine Maske (14) mit Durchbrechungen legt und die verformbare Masse in flüssiger, pastöser oder pulveriger Form in die Durchbrechungen füllt.

10. Verfahren nach Anspruch 6, **dadurch gekennzeichnet, daß** man ein Formwerkzeug (18) mit Vertiefungen verwendet und die Vorsprünge durch das Formwerkzeug formt, indem die verformbare Masse unter der Preßkraft des Formwerkzeugs (18) in Vertiefungen des Formwerkzeugs fließt.

11. Verfahren nach einem der Ansprüche 6 bis 10, **dadurch gekennzeichnet, daß** man als verformbare Masse eine pulverförmige Substanz verwendet, die man vor dem Formen der Stege ganzflächig auf der gasundurchlässigen Schicht verteilt.

12. Verfahren nach einem der Ansprüche 6 bis 10, **dadurch gekennzeichnet, daß** man als verformbare Masse eine in Form eines kompakten Körpers verwendet, den man vor dem Formen der Stege auf die gasundurchlässige Schicht legt.

13. Verfahren nach einem der Ansprüche 6 bis 12, **dadurch gekennzeichnet, daß** man als die verformbare Masse eine verwendet, die eine Polymerkomponente und eine kohlenstoffhaltige Komponente aufweise, und daß man bei der Formung der Vorsprünge (2) erhöhten Druck und erhöhte Temperatur ausübt, die so bemessen sind, daß die Polymerkomponente die kohlenstoffhaltige Komponente nur unwesentlich umhüllt.

14. Verfahren nach einem der Ansprüche 1 bis 13, **dadurch gekennzeichnet, daß** man die Vorsprünge (2) in einer Dichte - nach Fertigung der Bipolarplatte-kleiner als 1,8 g/cm³ herstellt.

15. Verfahren nach einem der Ansprüche 1 bis 14, **dadurch gekennzeichnet, daß** man die Vorsprünge (2) mit einer Porosität - nach Fertigung der Bipolarplatte-zwischen 10 und 70 %, bevorzugt zwischen 30 und 50 % herstellt.
